# EUROPÄISCHE PATENTSCHRIFT

(11) **EP 1 565 972 B1**
(45) Veröffentlichungstag und Bekanntmachung des Hinweises auf die Patenterteilung: **10.05.2006**
(21) Anmeldenummer: 03753270.2
(22) Anmeldetag: 28.08.2003
(51) Int. Cl.: H02B 11/127

(54) **EINSCHUB-LEISTUNGSSCHALTER**
POWER CIRCUIT BREAKER
DISJONCTEUR

(30) Priorität: 30.10.2002 DE 10251002
(43) Veröffentlichungstag der Anmeldung: 24.08.2005
(73) Patentinhaber: SIEMENS AKTIENGESELLSCHAFT, 80333 München (DE)
(72) Erfinder: SCHMIDT, Detlev, 12055 Berlin (DE); TÜRKMEN, Sezai, 13629 Berlin (DE); SEIDLER, Günter, 13359 Berlin (DE); WAJNBERG, Artur, 10555 Berlin (DE); THIEDE, Ingo, 12159 Berlin (DE)
(86) Internationale Anmeldenummer: PCT/DE2003/002885
(87) Internationale Veröffentlichungsnummer: WO 2004/040727

(56) Entgegenhaltungen:
- EP-A- 0 886 355
- DE-A- 3 015 259
- DE-U- 7 438 652

## Beschreibung

Die Erfindung betrifft einen Leistungsschalter mit einem Einschubrahmen, der mittels des Einschubrahmens in einer Schaltanlage anordbar ist.

Leistungsschalter der gattungsgemäßen Art sind bekannt. Durch die Anordnung in ihrem Einschubrahmen sind diese in einfacher Weise in eine Schaltanlage einfahr- beziehungsweise ausfahrbar. Hierbei kommt einer Arretierung des Leistungsschalters in ihrem Einschubrahmen große Bedeutung zu. Insbesondere bei. Leistungsschaltern mit hohem Kurzschlussausschaltvermögen tritt aufgrund der Schleifenwirkung der Strombahn des Leistungsschalters beziehungsweise der Schaltanlage eine Kraft auf, die auf den Leistungsschalter wirkt. Diese Kraft ist derart gerichtet, dass der Leistungsschalter aus seinem Einschubrahmen gedrängt wird. Insbesondere bei hohen fließenden Strömen (Kurzschlussströme) treten, da die wirkende Kraft mit dem Quadrat des Stromes ansteigt, erhebliche auf den Leistungsschalter wirkende Kräfte auf. Ist nun der Leistungsschalter nicht exakt in der Wirklinie dieser Kraft in seinem Einschubrahmen fixiert, kann es durch Hebelwirkung zu einer Drehmomentbeaufschlagung des Leistungsschalters kommen, so dass dieser eine Kippbewegung erfährt, die zu einer Relativbewegung zwischen Anschlussstücken der Schaltkontakte des Leistungsschalters und Kontaktlamellen des Einschubrahmens führt. Diese Relativbewegung kann bis zu einer Trennung der Schaltkontakte von den Kontaktlamellen führen, so dass eine Lichtbogenbildung nicht auszuschließen ist. Infolge der großen fließenden Ströme wäre hiermit eine Zerstörung des Leistungsschalters verbunden.

Bekannt ist, den Leistungsschalter mittels einer Verriegelungseinrichtung mit seinem Einschubrahmen zu verriegeln. Hierbei sind Haltesysteme bekannt, die von einer Einfahrwelle oder einem Einfahrantrieb zum Einfahren des Leistungsschalters in den Einschubrahmen betätigt werden. Derartige Haltesysteme zeichnen sich jedoch durch eine aufwendige konstruktive Gestaltung aus. Darüber hinaus ist ein Mindest-Spiel zwischen den Rückhalteelementen des Haltesystems und dem Einschubrahmen gegeben, da nur eine gleichzeitige Bewegung zwischen Leistungsschalter und Einschubrahmen und Ausheben der Rückhaltesysteme möglich ist.

Ferner sind starre Systeme bekannt, mittels denen die Einfahrrichtung beziehungsweise die Ausfahrrichtung des Leistungsschalters in den Einschubrahmen blockiert werden kann. Diese besitzen einen relativ kleinen wirksamen Hebelarm, so dass die insbesondere im Kurzschlussfall auftretenden großen Kräfte nicht sicher abgefangen werden können.

Aus DE 196 47 747 C1 ist ein einschiebbarer Geräteträger mit einer Verriegelungseinrichtung bekannt, bei dem durch Drehung einer Betätigungswelle eines Hauptschalters gleichzeitig eine Riegelstange verschoben wird, die wiederum einen Sperrschieber verschiebt, so dass eine Verriegelung des Geräteträgers erfolgt. Hierdurch wird eine Ein-Punkt-Verriegelung des Geräteträgers erzielt, so dass dieser positioniert ist. Wirken jedoch aufgrund hoher fließender Ströme (Kurzschlussströme) hohe Kräfte, bildet die aus DE 196 47 747 C1 bekannte Riegelstange einen Hebelarm, so dass eine Verlagerung des Geräteträgers und somit eines Leistungsschalters aus der gewünschten Verriegelungsposition nicht ausgeschlossen werden kann. Der Eingriffspunkt der Riegelstange in eine Riegelöffnung eines Gerätebodens wirkt hierbei als Drehpunkt, um den eine Auslenkung der Riegelstange erfolgen kann.

Der Erfindung liegt die Aufgabe zugrunde, einen Leistungsschalter der gattungsgemäßen Art zu schaffen, der durch eine einfache Anordnung sicher in seinem Einschubrahmen verriegelt werden kann.

Erfindungsgemäß wird diese Aufgabe durch einen Leistungsschalter mit den im Anspruch 1 genannten Merkmalen gelöst. Dadurch, dass die Verriegelungseinrichtung des Leistungsschalters von einem Schaltantrieb, insbesondere von einer Schaltwelle des Leistungsschalters betätigbar ist, wird vorteilhaft möglich, das Schließen der Schaltkontakte des Leistungsschalters mit der Verriegelung des Leistungsschalters im Einschubrahmen zu verknüpfen. Durch diese somit quasi gegebene Wirkverbindung zwischen geschlossenen Schaltkontakten des Leistungsschalters und Verriegelung des Leistungsschalters im Einschubrahmen kann eine auf die Schaltstellung des Leistungsschalters abgestimmte Rückhaltekraft auf den Leistungsschalter aufgebracht werden, die diesen sicher, auch im Falle des Fließens hoher Ströme, in der gewünschten Position hält. Insbesondere wird vermieden, dass die durch die hohen Ströme injizierten Kräfte die Anschlussstücke der Schaltkontakte und die Kontaktlamellen des Einschubrahmens auseinander drängen, so dass die eingangs-genannte Lichtbogenbildung unterdrückt werden kann.

In bevorzugter Ausgestaltung der Erfindung ist vorgesehen, dass die Schaltwelle wenigstens ein drehfest mit der Schaltwelle verbundenes Betätigungselement umfasst, über das die Verriegelungseinrichtung in die Verriegelungsstellung beziehungsweise die Entriegelungsstellung bringbar ist. Hierdurch wird in besonders einfacher Weise die Betätigung der Verriegelungseinrichtung möglich. Die Schaltwelle des Leistungsschalters trägt hierbei vorzugsweise außerhalb einer äußeren Begrenzungsstruktur ein drehfest angeordnetes Zahnrad beziehungsweise Zahnradsegment. Hierdurch wird in besonders einfacher Weise die Kopplung der Schaltbewegung der Kontaktanordnung mit der Betätigung der Verriegelungseinrichtung möglich. Die Schaltwelle erfährt zum Einschalten, d. h. zum Schließen der Schaltkontakte, beziehungsweise zum Ausschalten, d. h. zum Öffnen der Schaltkontakte, des Leistungsschalters eine Drehbewegung, die gleichzeitig ausgenutzt wird, um die Verriegelungseinrichtung zu betätigen.

Insbesondere, wenn in weiterer bevorzugter Ausgestaltung der Erfindung die axial verlagerbaren Verriegelungsbolzen einen Zahnstangenabschnitt aufweisen, der mit dem Betätigungselement kämmt, lässt sich so in einfacher Weise die Drehbewegung der Schaltwelle in eine Hubbewegung der Verriegelungsbolzen umsetzen. Somit wird eine sichere Arretierung des Leistungsschalters möglich.

Nach weiteren bevorzugten Ausgestaltungen der Erfindung kann das Betätigungselement mit den Verriegelungsbolzen über eine Kurbelanordnung, offene oder geschlossene Kurvenscheiben, Seilzüge, Bowdenzüge oder dergleichen wirkverbunden sein. Unabhängig von der konkreten Ausgestaltung dieser Wirkverbindung, lässt sich in einfacher Weise die Drehbewegung der Schaltwelle in die Verriegelungsbewegung beziehungsweise Entriegelungsbewegung der Verriegelungseinrichtung überführen.

Sämtliche Ausführungsvarianten zeichnen sich durch einen robusten, wartungsarmen beziehungsweise wartungsfreien Aufbau aus, so dass diese besonders geeignet sind, in relativ robusten Betriebsbedingungen ausgesetzten Leistungsschaltern eingesetzt zu werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Ansicht eines Leistungsschalters;
- Figur 2: eine schematische Draufsicht auf eine Verriegelungseinrichtung des Leistungsschalters in einer ersten Ausführungsvariante und
- Figur 3: eine Verriegelungseinrichtung in einer zweiten Ausführungsvariante.

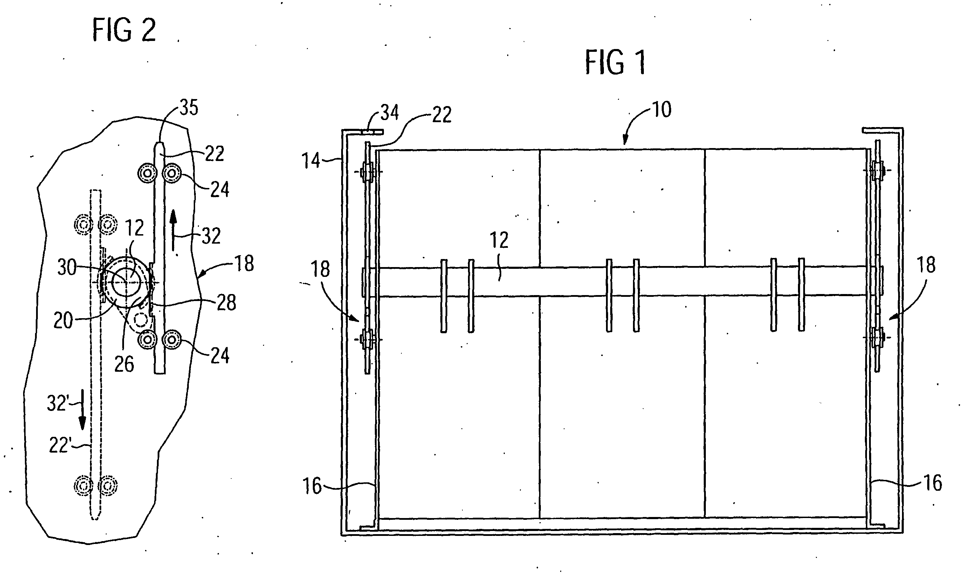

Figur 1 zeigt schematisch einen Leistungsschalter 10, wobei aus Gründen der Übersichtlichkeit auf die Darstellung von Details verzichtet wurde. Gemäß Darstellung handelt es sich beispielsweise um einen dreipoligen Leistungsschalter.

Der Leistungsschalter 10 umfasst eine Schaltwelle 12, mittels der bewegbare Schaltkontakte des Leistungsschalters 10 gegen feststehende Schaltkontakte führbar sind (Schließstellung) beziehungsweise von diesen wegführbar sind (Offenstellung). Die Schaltwelle 12 ist hierzu von einer nicht dargestellten Antriebsanordnung um ihre Längsachse in einem entsprechenden Winkelbereich drehbar:

Der Leistungsschalter 10 ist über einen lediglich angedeuteten Einschubrahmen 14 in einer nicht dargestellten Schaltanlage anordbar.

Die Schaltwelle 12 ist über seitliche Strukturelemente 16, beispielsweise Halte- und Aufnahmerahmen, hinaus verlängert und trägt dort beidseitig eine insgesamt mit 18 bezeichnete Verriegelungseinrichtung.

Aufbau und Wirkungsweise der Verriegelungseinrichtung 18 werden anhand von Figur 2 näher erläutert.

Die Verriegelungseinrichtung 18 umfasst ein auf der Schaltwelle 12 drehfest angeordnetes Betätigungselement 20, das mit einem Verriegelungsbolzen 22 zusammenwirkt. Der Verriegelungsbolzen 22 ist axial verlagerbar angeordnet und beispielsweise durch Führungsrollen 24 geführt.

Das Betätigungselement 20 wird von einem Zahnradsegment 26 gebildet, dem ein Zahnstangenabschnitt 28 des Verriegelungsbolzens 22 zugeordnet ist. Zahnradsegment 26 und Zahnstangenabschnitt 28 stehen in kämmendem Eingriff.

Die in Figur 1 und 2 dargestellte Verriegelungseinrichtung 18 zeigt folgende Funktion:

Bei Betätigung der Schaltwelle 12 zum Schließen der Schaltkontakte des Leistungsschalters 10 wird diese um ihre Drehachse 30, gemäß der Darstellung in Figur 2 entgegen dem Uhrzeigersinn, gedreht. Hierdurch erfährt das drehfest mit der Schaltwelle 12 verbundene Betätigungselement 20 eine identische Drehbewegung. Dadurch, dass das Betätigungselement 20 mit dem Verriegelungsbolzen 22 kämmt, erfährt der Verriegelungsbolzen 22 eine in Richtung des Pfeiles 32 gerichtete Hubbewegung. Hierdurch greift der Verriegelungsbolzen 22 in eine korrespondierende Öffnung 34 des Einschubrahmens 14 ein. Zur exakten Einführung des Verriegelungsbolzens 22 in die Öffnung 34 kann dieser eine kegelförmig ausgebildete Spitze 35 aufweisen.

Es wird deutlich, dass in einfacher Weise die Schaltbewegung des Leistungsschalters 10 über die Schaltwelle 12 auf die Betätigung der Verriegelungseinrichtung 18 übertragen ist. Das heißt, bei Einschalten des Leistungsschalters 10 erfolgt automatisch eine Überführung der Verriegelungseinrichtung 18 in die Verriegelungsstellung. Somit ist der Leistungsschalter 10 während seines Einschaltzustandes in jedem Falle gesichert. Hierbei erfolgt eine gesteuerte Bewegung der Verriegelungseinrichtung 18 derart, dass diese bereits verriegelt, bevor eine Vorkontaktberührung des Leistungsschalters 10 wirksam ist. Hierdurch wird sichergestellt, dass bereits in diesem eingeschalteten Zustand des Leistungsschalters 10 die Arretierung bereits sicher erfolgt ist.

Eine Entriegelung der Verriegelungseinrichtung 18 erfolgt analog durch Öffnen des Leistungsschalters 10. Hier erfährt wiederum die Schaltwelle 12 eine entgegengesetzte Drehbewegung um die Drehachse 30 - gemäß Darstellung der Figur 2 in Uhrzeigersinn. Die entsprechend resultierende Drehbewegung des Betätigungselementes 20 wird auf den Verriegelungsbolzen 22 übertragen, so dass dieser entgegen der Hubbewegung 32 abgesenkt wird, so dass der Verriegelungsbolzen 22 außer Eingriff mit der Öffnung 34 gelangt.

Wie Figur 2 andeutet, ist dem Betätigungselement 20 ein weiterer Verriegelungsbolzen 22' zugeordnet, der diametral gegenüberliegend zu dem Verriegelungsbolzen 22 angeordnet ist. Aufbau und Wirkungsweise des Verriegelungsbolzens 22' entspricht dem des Verriegelungsbolzens 22. Durch die diametral gegenüberliegende Anordnung erfährt der Verriegelungsbolzen 22' bei Hubbewegung 32 des Verriegelungsbolzens 22 eine entgegengesetzt gerichtete Hubbewegung 32'. Hierdurch wird möglich, zeitgleich den Leistungsschalter 10 sowohl in einem oberen Abschnitt als auch in einem unteren Abschnitt des Einschubrahmens 14 zu verriegeln.

Bei zwei vorgesehenen Verriegelungseinrichtungen 18 stehen somit insgesamt vier Verriegelungspunkte zur Verfügung. Diese gewährleisten eine sichere, auch bei hohen Strömen auftretende, hohen Krafteinwirkungen widerstehende Positionierung des Leistungsschalters 10 in seinem Einschubrahmen. Relativbewegungen von nicht weiter dargestellten Anschlussstücken der Schaltkontakte und Kontaktlamellen des Einschubrahmens zueinander können somit vermieden werden.

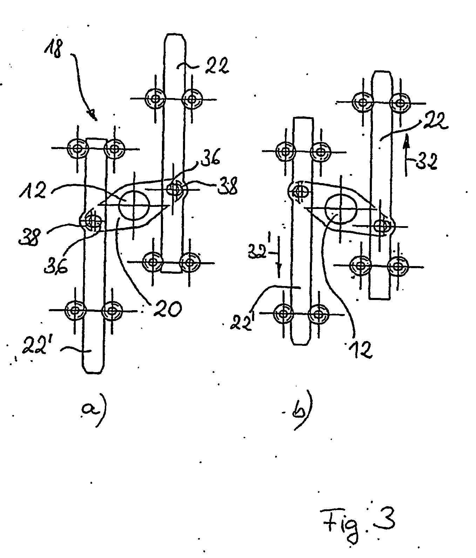

In der Figur 3 ist eine abgewandelte Ausführungsform der Verriegelungseinrichtung 18 gezeigt. In der Figur 3a ist hierbei die Entriegelungsstellung und in der Figur 3b die Verriegelungsstellung dargestellt. Gleiche Teile wie in den vorhergehenden Figuren sind mit gleichen Bezugszeichen versehen und nicht nochmals erläutert.

Im Unterschied zum Ausführungsbeispiel gemäß Figur 1 und 2 ist hier das Betätigungselement 20 als Kurbelanordnung 36 ausgebildet, die mit einer korrespondierenden Kulissenführung 38 der Verriegelungsbolzen 22 beziehungsweise 22' zusammenwirken. Auch hierdurch wird in einfacher Weise die Umsetzung der Drehbewegung der Schaltwelle 12 in die Hubbewegung 32 der Verriegelungsbolzen 22 und 22' möglich.

Dem Betätigungselement 20 sind zwei diametral gegenüberliegend angeordnete Verriegelungsbolzen 22 beziehungsweise 22' , zugeordnet. Auch hier wirkt ein als Doppelkurbelanordnung ausgebildetes Betätigungselement 20 mit Kulissenführungen 38 der nunmehr zwei Verriegelungsbolzen 22 beziehungsweise 22' zusammen.

## Patentansprüche

1. Leistungsschalter mit einem Einschubrahmen zur Anordnung in einer Schaltanlage und einer Verriegelungseinrichtung zur Verriegelung des Leistungsschalters im Einschubrahmen in einer Verriegelungsstellung, wobei die Verriegelungseinrichtung von einer Antriebsanordnung, insbesondere von einer Schaltwelle des Leistungsschalters betätigbar ist, **dadurch gekennzeichnet, dass** die Verriegelungseinrichtung (18) zwei im Wesentlichen axial in gegensinniger Wirkrichtung verlagerbare Verriegelungsbolzen umfasst, die in Formschluss mit dem Einschubrahmen bringbar sind.

2. Leistungsschalter nach Anspruch 1, **dadurch gekennzeichnet, dass** die Verriegelungseinrichtung (18) wenigstens ein drehfest mit der Schaltwelle verbundenes Betätigungselement (20) umfasst, über das die Verriegelungseinrichtung (18) in die Verriegelungsstellung beziehungsweise in die Entriegelungsstellung bringbar ist:

3. Leistungsschalter nach Anspruch 2, **dadurch gekennzeichnet, dass** das Betätigungselement (20) ein Zahnrad oder Zahnradsegment (26) ist, das einen Zahnstangenabschnitt (28) der Verriegelungsbolzen (22, 22') kämmt.

4. Leistungsschalter nach Anspruch 2, **dadurch gekennzeichnet, dass** das Betätigungselement (20) eine Kurbelanordnung (36) ist, die in Eingriff mit einer Kulissenführung (38) der Verriegelungsbolzen (22, 22') steht.

5. Leistungsschalter nach Anspruch 2, **dadurch gekennzeichnet, dass** das Betätigungselement (20) mit dem Verriegelungsbolzen (22, 22') über offene oder geschlossene Kurvenscheiben verbunden ist.

6. Leistungsschalter nach Anspruch 2, **dadurch gekennzeichnet, dass** das Betätigungselement (20) mit den Verriegelungsbolzen (22, 22') über einen Seilzug, Bowdenzug oder dergleichen verbunden ist.

7. Leistungsschalter nach einem der vorhergehenden Ansprüche, **dadurch gekennzeichnet, dass** die Verriegelungsstellung der Verriegelungseinrichtung (18) erreicht ist, bevor eine Vorkontaktberührung des Leistungsschalters (10) wirksam ist.

## Claims

1. Circuit breaker having a withdrawable-part rack for arrangement in a switchgear assembly and having a latching device for the purpose of latching circuit breaker in the withdrawable-part rack in a latched position, it being possible for the latching device to be actuated by a drive arrangement, in particular by a switching shaft of circuit breaker, **characterized in that** the latching device (18) comprises two latching bolts, which can be displaced essentially axially in the opposite direction of action and which can be brought into interlocking connection with the withdrawable-part rack.

2. Circuit breaker according to Claim 1, **characterized in that** the latching device (18) comprises at least one actuating element (20), which is connected to the switching shaft such that it is fixed against rotation and by means of which the latching device (18) can be brought into the latched position or into the unlatched position.

3. Circuit breaker according to Claim 2, **characterized in that** the actuating element (20) is a gear or a gear segment (26) which meshes with a toothed rod section (28) of the latching bolts (22, 22').

4. Circuit breaker according to Claim 2, **characterized in that** the actuating element (20) is a crank arrangement (36), which is in engagement with a link guide (38) of the latching bolts (22, 22').

5. Circuit breaker according to Claim 2, **characterized in that** the actuating element (20) is connected to the latching bolt (22, 22') via open or closed cam discs.

6. Circuit breaker according to Claim 2, **characterized in that** the actuating element (20) is connected to the latching bolts (22, 22') by means of a cable pull, a Bowden cable or the like.

7. Circuit breaker according to one of the preceding claims, **characterized in that** the latched position of the latching device (18) is reached before primary arcing contact of Circuit breaker (10) is effective.

## Revendications

1. Disjoncteur, comprenant un cadre de rack à disposer dans une installation de distribution et un dispositif de verrouillage pour verrouiller le disjoncteur dans le cadre de rack dans une position de verrouillage, le dispositif de verrouillage pouvant être actionné par un agencement d'entraînement, en particulier par un arbre de cammande du disjoncteur, **caractérisé en ce que** le dispositif (18) de verrouillage comprend deux axes de verrouillage pouvant être déplacés essentiellement axialement dans des sens d'action opposés, qui peuvent être mis à complémentarité de forme avec le cadre de rack.

2. Disjoncteur suivant la revendication 1, **caractérisé en ce que** le dispositif (18) de verrouillage comprend au moins un élément (20) d'actionnement, qui est solidaire en rotation de l'arbre de commande et par l'intermédiaire duquel le dispositif (18) de verrouillage peut être amené respectivement dans la position de verrouillage ou dans la position de déverrouillage.

3. Disjoncteur suivant la revendication 2, **caractérisé en ce que** l'élément (20) d'actionnement est une roue dentée ou un segment (26) de roue dentée, qui engrène avec un tronçon (28) de crémaillère des axes (22, 22') de verrouillage.

4. Disjoncteur suivant la revendication 2, **caractérisé en ce que** l'élément (20) d'actionnement est un agencement (36) de manivelle, qui est en prise avec un guide (38) de coulisse des axes (22, 22') de verrouillage.

5. Disjoncteur suivant la revendication 2, **caractérisé en ce que** l'élément (20) d'actionnement est relié à l'axe (22, 22') de verrouillage par l'intermédiaire de cames disques ouvertes ou fermées.

6. Disjoncteur suivant la revendication 2, **caractérisé en ce que** l'élément (20) d'actionnement est relié aux axes (22, 22') de verrouillage par l'intermédiaire d'un tirant à câble, d'un câble Bowden ou similaire.

7. Disjoncteur suivant l'une des revendications précédentes, **caractérisé en ce que** la position de verrouillage du dispositif (18) de verrouillage est atteinte avant qu'un contact direct de pré-contact du disjoncteur (10) soit actif.
